# DEMANDE DE BREVET EUROPEEN

(11) **EP 4 360 967 A1**
(43) Date de publication de la demande: **01.05.2024**
(21) Numéro de dépôt: 23206613.4
(22) Date de dépôt: 30.10.2023
(51) Int. Cl.: B60T 7/14, B60T 17/22

(54) **DISPOSITIF DE VEILLE POUR CONDUCTEUR DE VÉHICULE ET PROCÉDÉ DE VEILLE D'UN CONDUCTEUR DE VÉHICULE FERROVIAIRE**

(30) Priorité: 31.10.2022 FR 2211363
(71) Demandeur: ALSTOM Holdings, 93400 Saint-Ouen-sur-Seine (FR)
(72) Inventeur: HAZARD, Laurent, 13710 FUVEAU (FR)
(74) Mandataire: Lavoix

(57) **Abrégé**

Le dispositif de veille (10) comporte : des moyens de surveillance (13) des actions de veille du conducteur (11), un microcontrôleur (15) déterminant lorsqu'une action de veille a lieu, et transmettant une commande de sécurité lorsqu'aucune action de veille n'a lieu pendant une temporisation prédéfinie, et des moyens d'action (17) enclenchant une action lorsqu'il reçoit la commande du microcontrôleur (15). Un dispositif (22) de capture de vidéo est orienté vers le visage du conducteur (11), et des moyens (20) d'analyse détectent le clignement des yeux du conducteur. Un clignement détecté est considéré comme valide uniquement si une durée mesurée de fermeture des yeux est comprise entre un premier seuil et un second seuil prédéfinis, et si une fréquence de clignements consécutifs est inférieure à une fréquence prédéfinie, un clignement considéré comme valide formant une action de veille réinitialisant la temporisation.

## Description

La présente invention concerne un dispositif de veille pour conducteur de véhicule, notamment véhicule ferroviaire.

Un dispositif de veille est destiné à surveiller en continu l'état de veille d'un conducteur de véhicule, notamment un véhicule ferroviaire urbain, afin de provoquer un freinage d'urgence en cas de défaut de vigilance du conducteur, par exemple due à une perte de conscience.

Un dispositif de veille comporte habituellement une touche de veille, que le conducteur doit actionner régulièrement, par appui et/ou relâchement. Une telle touche de veille est généralement agencée sur un levier de commande de traction/freinage, ou sur un tableau de bord, ou encore elle est formée par une pédale actionnée par le pied du conducteur.

Par exemple, le conducteur doit, de manière cyclique, appuyer sur la touche de veille pendant une première durée maximale prédéfinie, puis relâcher la touche de veille pendant une seconde durée maximale prédéfinie. S'il ne respecte pas cette séquence, un signal sonore l'avertit.

Dans le cas où le conducteur reprend le cycle normal d'appui/relâchement, le signal sonore s'interrompt et l'exploitation peut se poursuivre normalement.

En revanche, si, au terme d'une temporisation, par exemple de deux secondes, après le déclenchement du signal sonore, le conducteur n'a pas repris le cycle normal d'appui et de relâchement, le freinage d'urgence est déclenché jusqu'à l'arrêt complet du véhicule.

Un tel dispositif de veille implique, pour le conducteur, une action répétitive d'appui et de relâchement, ce qui peut lui entrainer des douleurs physiques, notamment des troubles musculosquelettiques.

En outre, dans le cas où le conducteur est concentré sur des évènements de conduite exceptionnels, notamment quand il doit se concentrer sur une pluralité de sources de danger simultanées comme cela peut être cas dans une conduite en milieu urbain (tramway), le conducteur peut oublier d'actionner le dispositif de veille, ce qui peut entrainer un freinage d'urgence alors que ce freinage d'urgence n'était pas nécessaire. Or, il est important d'éviter tout freinage d'urgence non nécessaire, un freinage d'urgence n'étant pas un évènement anodin, car pouvant par exemple causer des chutes de passagers.

L'invention a notamment pour but de remédier à ces inconvénients, en proposant un dispositif de veille plus confortable pour le conducteur et limitant les risques de freinage d'urgence non nécessaire.

A cet effet, l'invention a notamment pour objet un dispositif de veille pour conducteur de véhicule, comportant des moyens de surveillance, un microcontrôleur de sécurité et des moyens d'action de sécurité, tels que :
- les moyens de surveillance sont destinés à surveiller des actions de veille du conducteur, et à transmettre des informations au microcontrôleur,
- le microcontrôleur de sécurité est configuré pour déterminer, en fonction des informations fournies par les moyens de surveillance, lorsqu'une action de veille a lieu, et pour transmettre une commande aux moyens d'action de sécurité lorsqu'aucune action de veille n'a lieu pendant une temporisation prédéfinie, la temporisation étant réinitialisée à chaque fois qu'une action de veille a lieu,
- les moyens d'action de sécurité sont propres à enclencher une action de sécurité lorsqu'il reçoit la commande du microcontrôleur de sécurité,
caractérisé en ce que :
- les moyens de surveillance comportent un dispositif de capture de vidéo, destiné à être orienté vers le visage du conducteur, et des moyens d'analyse de la vidéo capturée, configurés pour détecter les yeux du conducteur et pour détecter le statut ouvert ou fermé des yeux, un cycle de fermeture et ouverture des yeux étant considéré comme un clignement,
- le microcontrôleur de sécurité est configuré pour déterminer si un clignement détecté est valide ou non, un clignement détecté étant considéré comme valide uniquement si une durée mesurée de fermeture des yeux de ce clignement est comprise entre un premier seuil et un second seuil prédéfinis, et si une fréquence de clignements consécutifs est inférieure à une fréquence prédéfinie, un clignement considéré comme valide formant une action de veille réinitialisant la temporisation,
et en ce que le microcontrôleur de sécurité (15) est configuré pour émettre un message d'erreur lorsque la durée mesurée de fermeture des yeux est inférieure au premier seuil.

Le dispositif selon l'invention prévoit d'utiliser les clignements naturels des yeux du conducteur comme action de veille montrant l'état de veille de ce conducteur.

Afin d'assurer une bonne sécurité, le microcontrôleur de l'invention est configuré pour ne considérer comme action de veille que des clignements valides, c'est-à-dire dont la durée de fermeture des yeux est comprise dans un intervalle correspondant à un clignement naturel des yeux, et dont la fréquence correspond également à une fréquence normale de clignement des yeux.

Un dispositif de veille selon l'invention peut comporter en outre l'une ou plusieurs des caractéristiques suivantes, prises seules ou selon toutes combinaisons techniquement envisageables.
- Le premier seuil est 100 millisecondes, et/ou le second seuil 150 millisecondes, et/ou la fréquence prédéfinie est comprise entre 7,5 clignements par minutes et 50 clignements par minutes.
- Le microcontrôleur de sécurité est configuré pour transmettre la commande aux moyens d'action de sécurité lorsque la durée mesurée de fermeture des yeux est supérieure à un troisième seuil, par exemple 5 secondes et/ou lorsque la durée mesurée d'ouverture des yeux est supérieure à un quatrième seuil, par exemple 10 secondes.
- Le microcontrôleur de sécurité est configuré pour émettre un message d'erreur lorsque la fréquence de clignements consécutifs est supérieure à la fréquence prédéfinie.
- Le dispositif de veille comporte au moins deux moyens de surveillance distincts, le microcontrôleur de sécurité étant configuré pour réinitialiser la temporisation en cas d'action de veille provenant de l'un quelconque des moyens de surveillance.
- Les moyens de surveillance comportent en outre au moins l'un des moyens suivants : une touche de veille, dont l'activation selon une séquence prédéfinie est considérée comme une action de veille ; un levier de conduite, dont le changement de position est considéré comme une action de veille ; et/ou un avertisseur sonore, dont l'activation est considérée comme une action de veille.
- le dispositif de capture de vidéo est formé par au moins une caméra infrarouge.

L'invention concerne également un véhicule ferroviaire, caractérisé en ce qu'il comporte un dispositif de veille tel que défini précédemment.

L'invention concerne enfin un procédé de veille d'un conducteur de véhicule ferroviaire au moyen d'un dispositif de veille tel que défini précédemment, dans lequel :
- les moyens de surveillance surveillent des actions de veille du conducteur, et transmettent des informations au microcontrôleur de sécurité,
- le microcontrôleur de sécurité détermine, en fonction des informations fournies par les moyens de surveillance, lorsqu'une action de veille a lieu, et transmet une commande aux moyens d'action de sécurité lorsqu'aucune action de veille n'a lieu pendant une temporisation prédéfinie, la temporisation étant réinitialisée à chaque fois qu'une action de veille a lieu,
- les moyens d'action de sécurité enclenchent une action de sécurité lorsqu'il reçoit la commande du microcontrôleur de sécurité,
et dans lequel :
- les moyens d'analyse de la vidéo capturée détectent les yeux du conducteur et détectent le statut ouvert ou fermé des yeux, un cycle de fermeture et ouverture des yeux étant considéré comme un clignement
- le microcontrôleur de sécurité détermine si un clignement détecté est valide ou non, un clignement détecté étant considéré comme valide uniquement si une durée mesurée de fermeture des yeux est comprise entre un premier seuil et un second seuil prédéfinis, et si une fréquence de clignements consécutifs est inférieure à une fréquence prédéfinie, un clignement considéré comme valide formant une action de veille réinitialisant la temporisation.

Différents aspects et avantages de l'invention seront mis en lumière dans la description qui va suivre, donnée uniquement à titre d'exemple non limitatif et faite en se référant à la figure annexée :

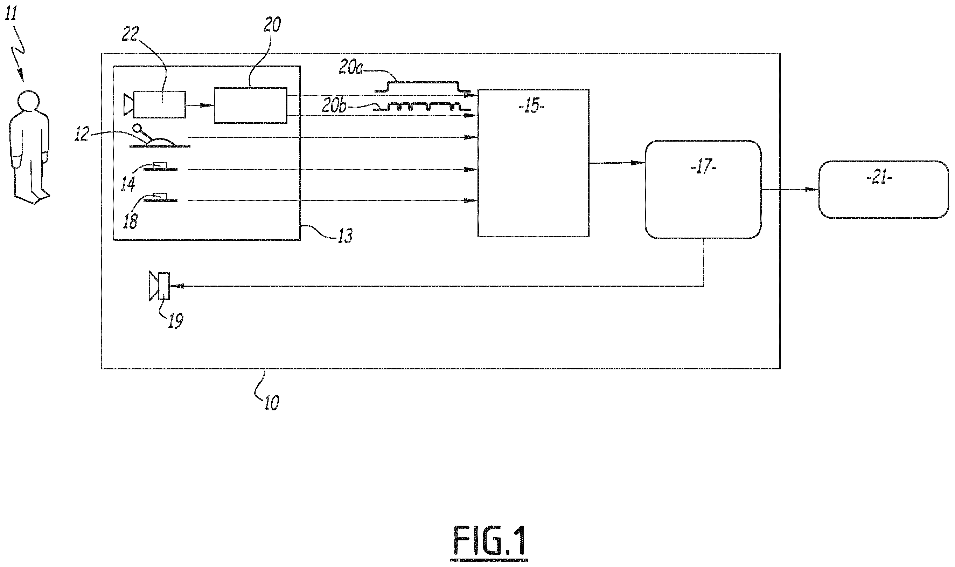

[Fig 1] La figure 1 représente schématiquement un dispositif de veille selon un exemple de mode de réalisation de l'invention.

On a représenté, sur la figure 1, un dispositif de veille, désigné par la référence générale 10, pour la veille d'un conducteur 11 d'un véhicule. Le dispositif de veille 10 est destiné à surveiller l'état de conscience du conducteur 11, en vue de détecter une éventuelle perte de conscience, afin d'enclencher des mesures de sécurité en cas d'une telle perte de conscience.

Le véhicule est par exemple un véhicule de transport public, notamment un véhicule ferroviaire tel qu'un tramway, mais pourrait être en variante un métro, ou tout autre véhicule envisageable.

L'invention est toutefois particulièrement adaptée à un tramway, car le freinage d'urgence est habituellement très puissant pour un tramway circulant à proximité de véhicules et de piétons, afin de limiter les risques de collision. Or, un freinage d'urgence puissant est une source d'inconfort pour les passagers du tramway, voire peut être dangereux s'il cause la chute de passagers. Il est donc particulièrement important, dans le cadre d'un tramway, d'éviter les freinages d'urgence indésirables.

Le dispositif de veille 10 comporte de manière classique des moyens 13 de surveillance du conducteur 11, un microcontrôleur de sécurité 15 traitant des informations fournies par les moyens de surveillance 13, et des moyens d'action de sécurité 17 commandés par le microcontrôleur de sécurité 15.

Les moyens de surveillance 13 sont destinés à surveiller des actions de veille du conducteur, démontrant son état de conscience.

Les moyens 17 d'action sont destinés à effectuer une action de sécurité en réponse à une perte de conscience détectée par les moyens de surveillance 13. L'action de sécurité comporte au moins l'une des actions suivantes :
- l'émission d'une alerte, visuelle et/ou sonore, à l'attention du conducteur,
- le freinage maximal de service ou le freinage d'urgence du véhicule ferroviaire.

A cet effet, les moyens d'action de sécurité comportent un dispositif 19 d'alerte visuelle et/ou sonore, et sont reliés à un dispositif de freinage d'urgence classique 21.

Avantageusement, l'action de sécurité comporte, dans un premier temps, l'émission de l'alerte, puis, au terme d'une temporisation, par exemple de deux secondes, le freinage maximal de service ou le freinage d'urgence si le conducteur n'effectue pas une action de veille réinitialisant la surveillance.

On notera que l'interface entre le microcontrôleur de sécurité 15 et les moyens d'action de sécurité 17 est identique à celle employée dans l'état de la technique.

Dans le cas d'un véhicule ferroviaire, celui-ci comporte de manière classique un levier 12 de commande de traction et de freinage, par exemple mobile angulairement autour d'un arbre, ou en variante mobile linéairement. La traction et le freinage dépendent de la position angulaire du levier de commande 12 par rapport à une position neutre. Ainsi, ce levier de commande 12 est actionné pour commander l'accélération et la décélération du véhicule.

Avantageusement, les moyens de surveillance 13 comportent ce levier de commande 12. Plus particulièrement, chaque activation du levier peut être considéré comme une action de veille, comme cela sera décrit ultérieurement plus en détail. En effet, l'actionnement du levier par le conducteur 11, lors de la conduite normale du véhicule, montre que ce conducteur est conscient. Il est toutefois à noter que le levier 12 n'est pas actionné en permanence lors de la conduite du véhicule, si bien que ce moyen de surveillance n'est pas suffisant. En effet, le levier reste immobile lorsque le véhicule circule à vitesse constante sur une section de voie.

De manière préférentielle, les moyens de surveillance 13 comportent une touche de veille 14. La touche de veille 14 est par exemple portée par le levier de commande 12, ou en variante ménagée sur un tableau de bord, ou dans une autre variante formée par une pédale actionnée par le pied du conducteur 11. On notera que ces variantes ne s'excluent pas mutuellement, et peuvent être mises en oeuvre parallèlement. On peut ainsi prévoir des moyens de surveillance comprenant une première touche de veille actionnée à la main et une seconde touche de veille actionnée au pied.

La touche de veille 14 est par exemple formée par un bouton poussoir, ou en variante par une touche tactile.

Dans ce cas, le microcontrôleur de sécurité 15 est généralement configuré pour détecter l'actionnement de la touche de veille 14 selon une séquence prédéfinie.

Avantageusement, la séquence prédéfinie consiste en un actionnement de la touche de veille 14 pendant une durée inférieure à une première durée prédéfinie, suivie d'un relâchement de la touche de veille 14 pendant une durée inférieure à une seconde durée prédéfinie.

Par exemple, la première durée prédéfinie est choisie entre 10 et 30 secondes, et la seconde durée prédéfinie est choisie entre 2 et 5 secondes.

Dans ce cas, chaque séquence d'actionnement de la touche de veille 14 est considérée comme une action de veille, comme cela sera décrit ultérieurement plus en détail.

Avantageusement, les moyens de surveillance 13 comportent également un avertisseur sonore 18, du type klaxon ou cloche, dont l'activation est considérée comme une action de veille.

Les moyens de surveillance 13 comportent par ailleurs un dispositif 22 de capture de vidéo, destiné à être orienté vers le visage du conducteur 11. Le dispositif de capture de vidéo 22 peut être formé par toute caméra envisageable, tant que la qualité de l'image est suffisante pour un traitement de l'image.

Le dispositif de capture 22 est agencé dans une cabine de conduite de sorte que son champ de vision inclut le visage du conducteur lorsque ce conducteur est à son poste de conduite. De préférence, le dispositif de capture 22 est orienté pour voir le visage du conducteur de face dans les conditions normales de conduite, c'est-à-dire lorsque le conducteur, à son poste de conduite, regarde vers l'avant. On notera que le visage du conducteur reste dans le champ de vision du dispositif de capture 22 lorsque le conducteur regarde sur les côtés ou regarde vers son tableau de bord, ces mouvements de tête liés à des conditions normales de conduite étant modérés.

Conformément à une variante, on peut prévoir plusieurs dispositifs de capture 22, en considérant un mode de réalisation où le conducteur est amené à bouger davantage dans la cabine de conduite, afin qu'à tout moment au moins l'un des dispositifs de capture 22 capture une vidéo de son visage.

Avantageusement, le dispositif de capture 22 est formé par au moins une caméra infrarouge. Cela permet au dispositif de capture 22 de détecter le mouvement des yeux à travers par exemple des lunettes de soleil.

Le dispositif de capture 22 est relié à des moyens 20 d'analyse de la vidéo capturée, pour leur transmettre les vidéos capturées afin de les analyser en continu.

Les moyens 20 d'analyse de la vidéo capturée sont configurés pour détecter les yeux du conducteur sur la vidéo capturée, et pour déterminer à tout moment le statut ouvert ou fermé de ces yeux.

On notera que des méthodes informatiques de détection des yeux et de détermination du statut ouvert ou fermé des yeux sont connues en soi, par exemple déjà largement utilisées dans le domaine de la photographie.

Les moyens d'analyse 20 sont reliés au microcontrôleur de sécurité 15, et sont propres à fournir une première information 20a selon laquelle les yeux sont détectés ou non, et une seconde information 20b concernant le statut ouvert ou fermé des yeux.

Ces informations sont utilisées par le microcontrôleur de sécurité 15 comme des actions de veille.

A cet effet, le microcontrôleur de sécurité 15 est configurés pour mesurer les durées d'ouverture et de fermeture des yeux, et la fréquence de cycles d'ouverture/fermeture des yeux (en d'autres termes, la fréquence de clignement des yeux), en clignements par minute.

Plus particulièrement, le microcontrôleur de sécurité 15 est configuré pour vérifier si les informations fournies par les moyens d'analyse 20 correspondent bien à des clignements des yeux. Le microcontrôleur de sécurité 15 est alors programmé pour prendre en compte, en tant qu'action de veille, uniquement des clignements valides des yeux, c'est-à-dire des clignements naturels des yeux pour leur lubrification.

En particulier, les caractéristiques de tels clignements naturels sont les suivantes :
- La fréquence des clignements des yeux est généralement comprise entre 10 et 50 clignements par minute, et en moyenne entre 10 et 15 clignements par minute. Ainsi, les clignements des yeux surviennent suffisamment souvent pour pouvoir être utilisé en tant qu'actions de veille ;
- La durée d'un clignement des yeux est généralement comprise entre 100 et 150 millisecondes ;
- Le clignement est généralement simultané sur les deux yeux.

C'est en prenant en compte ces caractéristiques que le microcontrôleur de sécurité 15 est configuré pour déterminer, à partir des informations reçues des moyens d'analyse, si on est en présence d'un clignement des yeux ou non.

Ainsi, lorsque la durée mesurée de fermeture des yeux est inférieure à un premier seuil prédéfini, par exemple inférieure à 100 millisecondes, cet évènement ne sera pas considéré comme un clignement valide des yeux, car trop court. Cet évènement sera considéré comme dû à une erreur de détection.

De même, lorsque la durée mesurée de fermeture des yeux est supérieure à un second seuil prédéfini, par exemple supérieure à 150 millisecondes, cet évènement ne sera pas considéré comme un clignement valide des yeux, car trop long. Cet évènement pourra être considéré comme dû à une somnolence du conducteur.

Lorsque cette durée, durant laquelle l'état des yeux du conducteur est déterminé comme étant fermé en permanence, dépasse un troisième seuil prédéfini, par exemple 5 secondes, cet évènement est considéré comme une défaillance du conducteur.

De même, lorsque l'état des yeux du conducteur est déterminé comme ouvert en permanence, cet évènement est également considéré comme une défaillance du conducteur. Cet événement survient lorsque l'état des yeux est déterminé comme ouvert pendant une durée supérieure à un quatrième seuil, par exemple 10 secondes.

Par ailleurs, lorsque le nombre de clignements consécutifs est supérieur à un troisième seuil prédéfini, par exemple supérieur à 50 clignements par minute, ces évènements ne seront pas considérés comme des clignements valides des yeux, car trop rapprochés. Ces évènements seront considérés comme dus à une erreur de détection. Cette fréquence des clignements peut être surveillée en mesurant la durée entre deux clignements consécutifs, le microcontrôleur de sécurité considérant qu'il s'agit d'une erreur de détection lorsque l'intervalle entre deux clignements consécutifs est inférieur à une durée prédéfinie (par exemple inférieure à 1 seconde), ou en variante lorsque le nombre de clignements durant une période glissante prédéfinie dépasse un seuil, par exemple plus de 6 clignements durant les 5 dernières secondes.

Lorsque les yeux ne sont pas détectés, c'est-à-dire que les yeux ne sont plus dans le champ de vision de la caméra 22, il est considéré que le conducteur ne regarde pas la voie ferrée sur laquelle il circule. Cet évènement peut être considéré comme une défaillance du matériel ou d'une défaillance du conducteur.

Cet évènement est par exemple considéré comme une défaillance du matériel lorsque des actions de veille ont lieu pendant cet évènement, par exemple lorsque la touche de veille 14 est actionnée correctement.

En revanche, l'évènement est considéré comme une défaillance du conducteur si aucune autre action de veille n'a lieu durant cet évènement d'absence de détection des yeux. Dans ce cas, la temporisation du microcontrôleur de sécurité peut être réduite, pour actionner l'alarme sonore au terme de cette temporisation réduite. Ceci est toutefois de préférence conditionné en fonction de la vitesse du véhicule, la temporisation du microcontrôleur de sécurité 15 n'étant réduite que si la vitesse du véhicule est supérieure à une vitesse prédéfinie. De même, cela peut être conditionné par la durée de l'évènement d'absence de détection des yeux, pour ne pas enclencher de mesure alors que l'absence de détection est momentanée ou accidentelle.

Lorsqu'une ouverture ou fermeture n'est détectée que sur un oeil, on considérera qu'il ne s'agit pas d'un clignement des yeux, si bien que cet évènement ne sera pas considéré comme une action de veille.

Compte tenu de ce qui précède, différents évènements peuvent être déterminés par les moyens de surveillance, notamment : un évènement de défaut de détection, un évènement de défaillance du conducteur, et un évènement de clignement normal.

Dans le cas d'un défaut de détection, on peut prévoir l'affichage d'un message d'erreur, pour le conducteur et/ou en vue d'une maintenance du dispositif de veille. Un tel message d'erreur peut être généré à chaque défaut de détection, ou en variante si le nombre de défauts de détection durant une période prédéfinie dépasse un nombre prédéfini.

Avantageusement, le microcontrôleur de sécurité est programmé pour ne plus considérer les clignements des yeux comme actions de veille lorsqu'un message d'erreur a été émis, ou en variante lorsqu'un nombre prédéfini de messages d'erreurs ont été émis pendant une période prédéfinie. En effet, dans ce cas, la détection de clignement des yeux est considérée comme défaillante, et la veille est alors effectuée uniquement par les autres moyens de surveillance 13.

Dans le cas d'une défaillance du conducteur, le microcontrôleur de sécurité 15 peut commander aux moyens d'action de sécurité 17 d'enclencher les actions de sécurité, par exemple émettre une alarme sonore, puis effectuer un freinage d'urgence dans le cas où le conducteur ne réagirait pas malgré l'alarme sonore.

En revanche, lorsqu'un clignement valide est détecté, cet événement est considéré comme une action de veille, et utilisé par le microcontrôleur de sécurité 15.

Pour récapituler, le microcontrôleur de sécurité 15 est configuré pour détecter diverses actions de veille, notamment les clignements des yeux, ainsi que, de manière optionnelle, l'actionnement de la touche de veille 14 selon la séquence prédéfinie, le changement de position du levier de conduite 12, ou l'actionnement d'un autre élément de conduite (par exemple de l'avertisseur sonore 19).

Lorsqu'au moins l'une de ces actions de veille est détectée, le microcontrôleur de sécurité réinitialise une temporisation.

Si, au terme de cette temporisation, aucune autre action de veille n'a été détectée, alors le microcontrôleur de sécurité commande aux moyens d'action de sécurité d'enclencher une action de sécurité. En effet, cela signifie qu'aucun clignement d'oeil n'a été détecté durant cette temporisation, que l'actionnement de la touche de veille 14 n'a pas été effectué, et que les éléments de conduite tels que le levier de conduite ou l'avertisseur sonore n'ont pas été actionnés. En d'autres termes, une défaillance du conducteur est probable.

Il est à noter que seule l'une des actions de veille est nécessaire pour réinitialiser la temporisation. Ainsi, le clignement des yeux (s'il est valide) suffit pour réinitialiser la temporisation, si bien que le conducteur n'a pas besoin d'actionner la touche de veille 14.

Le clignement naturel des yeux est ainsi utilisé pour la surveillance de la veille du conducteur, sans que le conducteur ait à y penser ou à effectuer des actions particulières. Les autres moyens de surveillance 13, notamment la touche de veille 14, sont là pour la redondance, notamment en cas de défaillance de la détection de clignement des yeux.

On notera que l'invention n'est pas limitée au mode de réalisation décrit, et pourrait présenter diverses variantes.

## Revendications

1. Dispositif (10) de veille pour conducteur (11) de véhicule, comportant des moyens de surveillance (13), un microcontrôleur de sécurité (15) et des moyens d'action de sécurité (17), tels que :
- les moyens de surveillance (13) sont destinés à surveiller des actions de veille du conducteur (11), et à transmettre des informations au microcontrôleur de sécurité (15),
- le microcontrôleur de sécurité (15) est configuré pour déterminer, en fonction des informations fournies par les moyens de surveillance (13), lorsqu'une action de veille a lieu, et pour transmettre une commande aux moyens d'action de sécurité (17) lorsqu'aucune action de veille n'a lieu pendant une temporisation prédéfinie, la temporisation étant réinitialisée à chaque fois qu'une action de veille a lieu,
- les moyens d'action de sécurité (17) sont propres à enclencher une action de sécurité lorsqu'il reçoit la commande du microcontrôleur de sécurité (15),
**caractérisé en ce que** :
- les moyens de surveillance (13) comportent un dispositif (22) de capture de vidéo, destiné à être orienté vers le visage du conducteur (11), et des moyens (20) d'analyse de la vidéo capturée, configurés pour détecter les yeux du conducteur (11) et pour détecter le statut ouvert ou fermé des yeux, un cycle de fermeture et ouverture des yeux étant considéré comme un clignement,
- le microcontrôleur de sécurité (15) est configuré pour déterminer si un clignement détecté est valide ou non, un clignement détecté étant considéré comme valide uniquement si une durée mesurée de fermeture des yeux de ce clignement est comprise entre un premier seuil et un second seuil prédéfinis, et si une fréquence de clignements consécutifs est inférieure à une fréquence prédéfinie, un clignement considéré comme valide formant une action de veille réinitialisant la temporisation
et **en ce que** le microcontrôleur de sécurité (15) est configuré pour émettre un message d'erreur lorsque la durée mesurée de fermeture des yeux est inférieure au premier seuil.

2. Dispositif de veille (10) selon la revendication 1, dans lequel le premier seuil est 100 millisecondes, et/ou le second seuil 150 millisecondes, et/ou la fréquence prédéfinie est comprise entre 7,5 clignements par minutes et 50 clignements par minutes.

3. Dispositif de veille (10) selon l'une quelconque des revendications précédentes, dans lequel le microcontrôleur de sécurité (15) est configuré pour transmettre la commande aux moyens d'action de sécurité (17) lorsque la durée mesurée de fermeture des yeux est supérieure à un troisième seuil, par exemple 5 secondes et/ou lorsque la durée mesurée d'ouverture des yeux est supérieure à un quatrième seuil, par exemple 10 secondes.

4. Dispositif de veille (10) selon l'une quelconque des revendications précédentes, dans lequel le microcontrôleur de sécurité (15) est configuré pour émettre un message d'erreur lorsque la fréquence de clignements consécutifs est supérieure à la fréquence prédéfinie.

5. Dispositif de veille (10) selon l'une quelconque des revendications précédentes, comportant au moins deux moyens de surveillance (13) distincts, le microcontrôleur de sécurité (15) étant configuré pour réinitialiser la temporisation en cas d'action de veille provenant de l'un quelconque des moyens de surveillance (13).

6. Dispositif de veille (10) selon l'une quelconque des revendications précédentes, dans lequel les moyens de surveillance (13) comportent en outre au moins l'un des moyens suivants :
- une touche de veille (14), dont l'activation selon une séquence prédéfinie est considérée comme une action de veille ;
- un levier de conduite (12), dont le changement de position est considéré comme une action de veille ;
- un avertisseur sonore (18), dont l'activation est considérée comme une action de veille.

7. Dispositif de veille (10) selon l'une quelconque des revendications précédentes, dans lequel le dispositif (22) de capture de vidéo est formé par au moins une caméra infrarouge.

8. Véhicule ferroviaire, **caractérisé en ce qu'**il comporte un dispositif de veille (10) selon l'une quelconque des revendications précédentes.

9. Procédé de veille d'un conducteur de véhicule ferroviaire au moyen d'un dispositif de veille (10) selon l'une quelconque des revendications 1 à 7, dans lequel :
- les moyens de surveillance (13) surveillent des actions de veille du conducteur, et transmettent des informations au microcontrôleur de sécurité (15),
- le microcontrôleur de sécurité (15) détermine, en fonction des informations fournies par les moyens de surveillance, lorsqu'une action de veille a lieu, et transmet une commande aux moyens d'action de sécurité (17) lorsqu'aucune action de veille n'a lieu pendant une temporisation prédéfinie, la temporisation étant réinitialisée à chaque fois qu'une action de veille a lieu,
- les moyens d'action de sécurité (17) enclenchent une action de sécurité lorsqu'il reçoit la commande du microcontrôleur de sécurité (15),
et dans lequel :
- les moyens (20) d'analyse de la vidéo capturée détectent les yeux du conducteur et détectent le statut ouvert ou fermé des yeux, un cycle de fermeture et ouverture des yeux étant considéré comme un clignement
- le microcontrôleur de sécurité (22) détermine si un clignement détecté est valide ou non, un clignement détecté étant considéré comme valide uniquement si une durée mesurée de fermeture des yeux est comprise entre un premier seuil et un second seuil prédéfinis, et si une fréquence de clignements consécutifs est inférieure à une fréquence prédéfinie, un clignement considéré comme valide formant une action de veille réinitialisant la temporisation.
